# EUROPÄISCHE PATENTANMELDUNG

(11) **EP 1 217 567 A1**
(43) Veröffentlichungstag der Anmeldung: **26.06.2002**
(21) Anmeldenummer: 00128095.7
(22) Anmeldetag: 21.12.2000
(51) Int. Cl.: G06F 19/00, A63F 13/12

(54) **Verfahren zur computergestützten simulierten Teilnahme an einem realen Rennen**

(71) Anmelder: Goeman, Volker, 26419 Schortens (DE)
(72) Erfinder: Goeman, Volker, 26419 Schortens (DE)

(57) **Zusammenfassung**

Ein Verfahren zur computergestützten simulierten Teilnahme an einem realen Rennen mit mehreren Rennteilnehmern, wobei die räumlichen Bedingungen einer realen Rennstrecke für den Rennverlauf zugrundegelegt werden und die simulierte Rennteilnahme eines Nutzers aus der Sicht des Nutzers dargestellt wird, hat die Schritte:
- Laden von erfassten Renndaten eines realen Rennverlaufs mit mindestens den erfassten geographischen Positionen von realen Rennteilnehmern auf einen dezentralen Simulationsrechner;
- Simulation der Rennteilnahme des Nutzers in dem realen Rennverlauf mit dem Simulationsrechner;
- Darstellen des simulierten und realen Rennverlaufs aus der Sicht des Nutzers.

## Beschreibung

Die Erfindung betrifft ein Verfahren zur computergestützten simulierten Teilnahme an einem realen Rennen mit mehreren Rennteilnehmern, wobei die räumlichen Bedingungen einer realen Rennstrecke für den Rennverlauf zugrundegelegt werden und die simulierte Rennteilnahme eines Nutzers aus der Sicht des Nutzers dargestellt wird.

Sowohl Computerautorennspiele als auch die realen Autorennen der Formel 1 erfreuen sich großer Beliebtheit. Bei den bekannten Computerautorennspielen werden die realen bekannten Rennstrecken simuliert wiedergegeben, wobei der Nutzer aus der Sicht in einem Cockpit eines simulierten Rennwagens ein Rennen gegen weitere Rennwagen fährt, die vom Rechner zufällig gesteuert sind.

Aufgabe der Erfindung war es, ein verbessertes Verfahren zur computergestützten simulierten Teilnahme an einem realen Rennen mit mehreren Rennteilnehmern zu schaffen, das insbesondere für den Nutzer eine größere Attraktivität bietet.

Wie herkömmlich bekannt, sollten bei dem Verfahren die räumlichen Bedingungen einer realen Rennstrecke für den Rennverlauf zugrundegelegt und die simulierte Rennteilnahme eines Nutzers aus der Sicht des Nutzers dargestellt werden.

Die Aufgabe wird durch das Verfahren erfindungsgemäß gelöst mit den Schritten:
- Laden von erfassten Renndaten eines realen Rennverlaufs mit mindestens den erfassten geographischen Positionen von realen Rennteilnehmern auf einen dezentralen Simulationsrechner;
- Simulation der Rennteilnahme des Nutzers in dem realen Rennverlauf mit dem Simulationsrechner;
- Darstellen des simulierten und realen Rennverlaufs aus der Sicht des Nutzers.

Es wird somit vorgeschlagen, die Renndaten eines realen Rennverlaufs, insbesondere die geographischen Positionen der Rennteilnehmer, zu erfassen und auf einen dezentralen Simulationsrechner zu laden. Die Renndaten können zentral z.B. über das Internet einer Vielzahl von Teilnehmern zeitgleich zu dem tatsächlichen Rennen verfügbar gemacht werden. Damit erhält das Rennen für den Zuschauer eine erhöhte Attraktivität, da er sich aktiv an dem Rennen als simulierter Fahrer beteiligen kann. Hierzu wird der simulierte und der reale Rennverlauf aus der Sicht des Nutzers dargestellt.

Durch das Verfahren wird es einem Computerspieler ermöglicht, an einem realen Formel 1-Rennen teilzunehmen, das hierbei mit größtmöglicher Realität auf dem Bildschirm des Nutzers wiedergegeben wird.

Die geographischen Positionen der Rennteilnehmer können durch Messung der Laufzeiten eines Funksignals von einem Funksender eines Rennteilnehmers mittels mehrerer Funkempfänger bestimmt werden.

Besonders vorteilhaft ist jedoch eine Ortung der Rennteilnehmer mit einem satellitengestützten Ortungssystem, z.B. mit einem GPS-Empfänger.

Eine weitere Möglichkeit der Ermittlung der geographischen Positionen der Rennteilnehmer besteht in einer optischen Auswertung mit einem bekannten Bildauswertesystem, das an eine Vielzahl von Bildaufnahmekameras angeschlossen ist, die an der Rennstrecke verteilt angeordnet sind. Dieses Verfahren hat den Vorteil, daß die in der Regel bereits vorhandenen Bildaufnahmekameras genutzt werden können. Hierdurch ist nur ein relativ geringer Zusatzaufwand erforderlich.

Die Daten zur Beschreibung der räumlichen Bedingungen der realen Rennstrecke für die Simulation der Rennstrecke kann von einem zentralen Server auf einen dezentralen Sirnulationsrechner geladen werden. Es ist aber auch denkbar, daß die Rennstrecke bereits in das Computerprogramm zur Durchführung des Verfahrens integriert ist. Damit kann der Nutzer bereits im Vorfeld eines Rennens durch Testfahrten z.B. seinen Formel 1-Rennwagen abstimmen (Fahrwerk, Getriebe etc.).

Die Erfindung wird nachfolgend anhand der beigefügten Zeichnungen näher erläutert, die einige beispielhafte Ausführungsbeispiele darstellen. Es zeigen:
- Fig. 1:: Schematische Darstellung einer Systemumgebung zur Durchführung des erfindungsgemäßen Verfahrens, wobei die geographischen Positionen der realen Rennteilnehmer mittel einer Laufzeitmessung bestimmt werden;
- Fig. 2:: Schematische Darstellung einer Systemumgebung zur Durchführung des erfindungsgemäßen Verfahrens, wobei die geographischen Positionen der realen Rennteilnehmer mittels satellitengestützter Ortungssysteme bestimmt werden;
- Fig. 3:: Schematische Darstellung einer Systemumgebung zur Durchführung des erfindungsgemäßen Verfahrens, wobei die geographischen Positionen der realen Rennteilnehmer mittels Bildaufnahmekameras bestimmt werden.

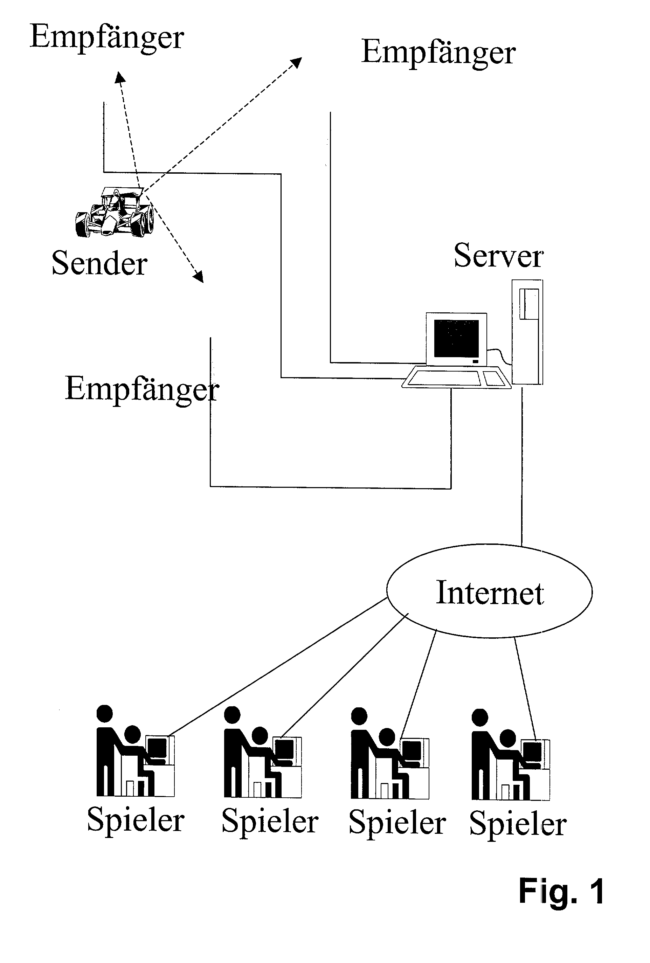

Die Figur 1 läßt eine schematische Darstellung einer Systemumgebung zur Durchführung des erfindungsgemäßen Verfahrens erkennen, wobei die geographischen Positionen der realen Rennteilnehmer mittels einer Laufzeitmessung bestimmt werden. Hierzu verfügt ein Rennteilnehmer über einen Funksender, um definierte Funksignale abzugeben. Diese werden von mindestens drei Funkempfängern, die an bekannten Positionen angeordnet sind, empfangen und die Laufzeitunterschiede werden gemessen und zentral in bekannter Weise ausgewertet, um die aktuelle Position des Rennteilnehmers zu erfassen.

Die erfassten aktuellen Positionen der Rennteilnehmer werden über einen zentralen Server für den Zugriff z.B. über das Internet von dezentralen Simulationsrechnern verfügbar gehalten.

Zusätzlich zu den Positionsdaten können auch Beschleunigungswerte erfasst und an den Nutzer übertragen werden, die beispielsweise das Ausbrechen oder Schleudern der Rennwagen anzeigen. Dies kann über einen im Rennwagen befindlichen Kreisel erfolgen, der die im Fahrzeug herrschende Beschleunigungswerte misst und über Funk an einen Zentralrechner überträgt. Die Beschleunigungswerte werden hierbei mit den Positionsdaten verknüpft und wiederum über das Internet an den Nutzer übertragen.

Die Positionen und ggf. weitere Informationen wie Beschleunigungswerte, Signale an der Rennstrecke etc. werden als Renndaten von dem Simulationsrechner geladen.

Auf dem Simulationsrechner wird nunmehr in bekannter Weise eine Simulation des Rennverlaufs auf der Basis der Daten über die Rennstrecke generiert. Die Daten über die Rennstrecke, wie z.B. Streckenverlauf, Straßenbelag, Signale etc., werden entweder vom Server geladen oder sind bereits auf dem Simulationsrechner vorhanden. Die Simulation erfolgt aus der Sicht des Nutzers bzw. Spielers.

Durch die zentrale Verfügbarkeit der Renndaten können eine Vielzahl von Nutzern gleichzeitig die Teilnahme an dem realen Rennen simulieren, ohne sich gegenseitig zu beeinflussen.

Das Verfahren kann mit einer für den Fachmann geläufigen Programmierung vorteilhaft dahingehend erweitert werden, daß die Kosten zur Unterhaltung eines Rennstalls simuliert werden. Zur Einnahmengenerierung hat der Nutzer die Möglichkeit, über Internet-Verknüpfungen (Links) zu entsprechenden Internetangeboten mit Sponsoren in Kontakt zu treten. Hierdurch erhält der Nutzer ein ausreichendes Funding für seinen Rennstall und die Werbepartner eines Rennereignisses (z.B. Formel 1) erhalten eine Möglichkeit der Selbstdarstellung. Gleichermaßen können Zubehörteile von spezialisierten Firmen (Motoren-, Getriebelieferanten etc.) bezogen werden.

Im Vorfeld des eigentlichen Rennens besteht eine Möglichkeit der Teilnahme des Nutzers am freien Training bzw. Qualifying. Weiterhin besteht eine Option, direkt vor dem Rennen die Rennstrategie festzulegen. Dies beinhaltet Anzahl und Timing der Boxenstopps, die Wahl zwischen Trocken- oder Regenreifen, die Menge Kraftstoff die getankt wird etc.

Im eigentlichen Rennen reiht sich der Nutzer am heimischen Bildschirm in die letzte Startreihe ein. Er sieht dabei die vor ihm befindlichen Rennwagen und die Startampel. Weitere Nutzer, die an dem Rennen teilnehmen, werden nicht wahrgenommen. Die Positionen der anderen Rennwagen werden ohne Unterbrechung über das Internet an den Simulationsrechner des Nutzers übertragen. Das Computerprogramm auf dem Simulationsrechner des Nutzers generiert ein Abbild der entsprechenden Rennwagen an der Stelle, die über das Internet gemeldet wird. Der Rennwagen des Nutzers verfügt über ein Fahrverhalten, das konkurrenzfähig zu den Rennwagen der Formel 1 ist. Der Rennfahrer am heimischen Simulationsrechner unterliegt dabei dem Reglement der Formel 1 und muss beispielsweise gelbe Fahnen während des Rennens beachten. Ein Fehlstart wird ebenso mit einer Zeitstrafe geahndet, wie das Übertreten der Geschwindigkeitsbegrenzung in der Boxengasse. Ein Unfall des Nutzers beendet für ihn das Rennen.

Es wird deutlich, daß das Kernstück des Verfahrens ein System zur kontinuierlichen Erfassung der Positionen der Formel 1 Rennwagen ist. Dies kann nicht nur durch die skizzierte Laufzeitmessung, sondern auf unterschiedlichste Art und Weise geschehen.

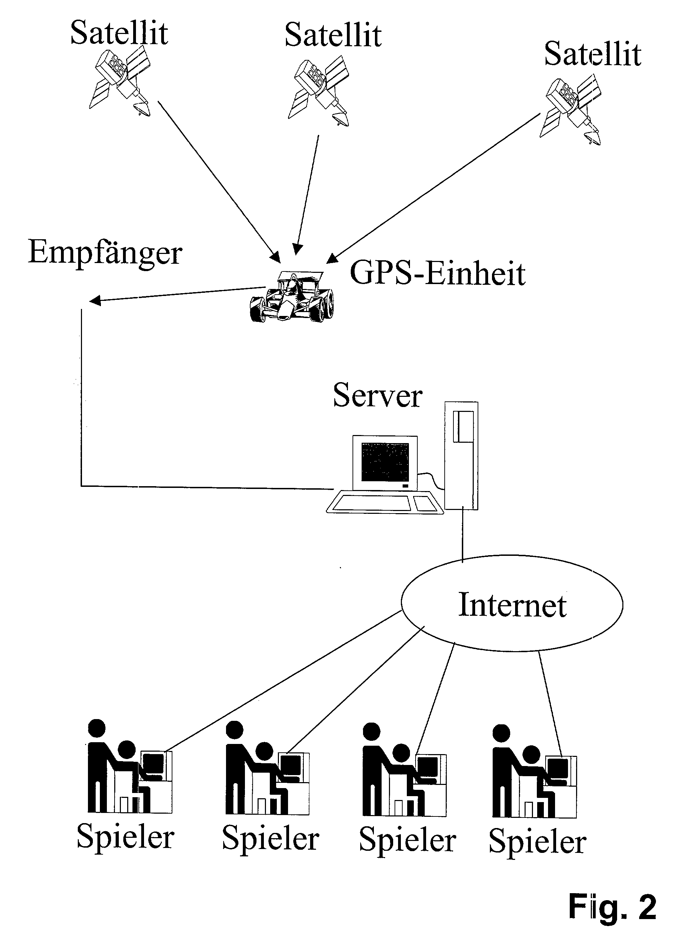

Die Figur 2 läßt eine schematische Darstellung einer Systemumgebung zur Durchführung des erfindungsgemäßen Verfahrens erkennen, wobei die geographischen Positionen der realen Rennteilnehmer mittels eines satellitengestützen Ortungssystems bestimmt werden. Hierbei verfügt jeder Rennteilnehmer über eine entsprechende Einrichtung, vorzugsweise einen Global-Positioning-Empfänger (GPS) und einen Funksender. Die durch die GPS-Einheit gemessenen Positionsdaten werden dann über den Funksender an einen Funkempfänger gesendet und in den zentralen Server eingespeist. Von dort werden die Positionen als Renndaten in vorstehend beschriebener Weise den Simulationsrechnern zur Verfügung gestellt.

Vorzugsweise werden die in Rennwagen ohnehin vorhandenen GPS-Einheiten und auf der Rennstrecke verfügbaren Funkempfänger für das Verfahren mitbenutzt. Üblicherweise werden die während des Rennens ermittelten Positionen sämtlicher real teilnehmenden Fahrzeuge an ein Kontrollzentrum gemeldet. Diese verfügbaren Daten werden verarbeitet und über das Internet an die teilnehmenden Nutzer bzw.

Spieler übermittelt. Auf dem Simulationsrechner des Nutzers werden die Daten mit Hilfe einer geeigneten Software in bewegte Bilder umgewandelt.

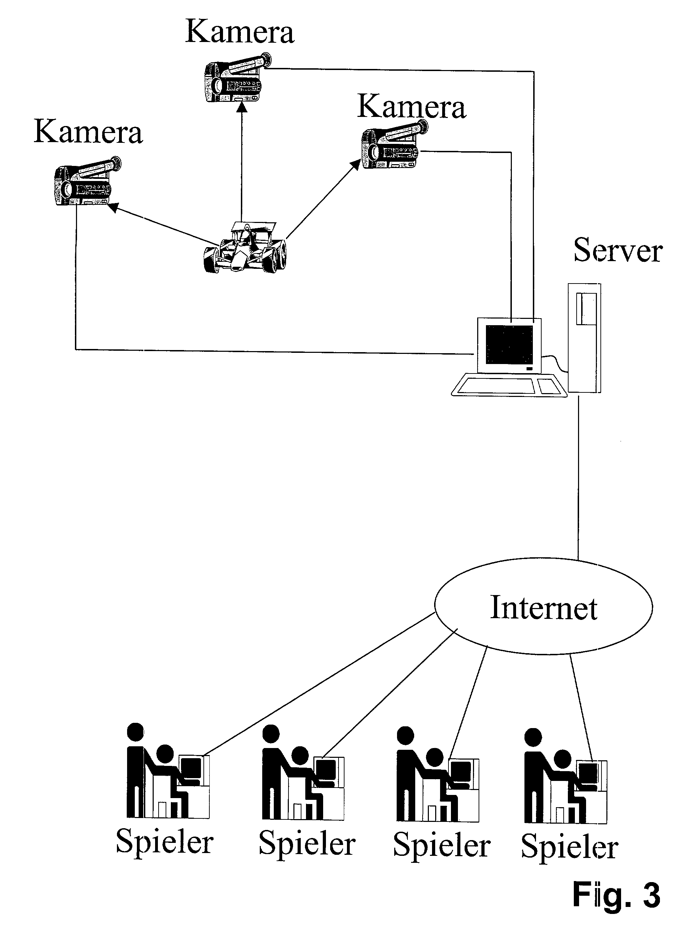

Die Figur 3 läßt eine schematische Darstellung einer Systemumgebung zur Durchführung des erfindungsgemäßen Verfahrens erkennen, wobei die geographischen Positionen der realen Rennteilnehmer mittels Bildaufnahmekameras entlang der Rennstrecke und einem automatischen Bildverarbeitungssystem in bekannter Weise erfasst werden. Hierbei werden die Position aller am Rennen teilnehmenden Fahrzeuge aus den Bilddaten errechnet, die durch vorzugsweise ohnehin entlang einer Rennstrecke vorhandenen Bildaufnahmekameras oder durch Fernsehbilder zur Verfügung stehen. Wahlweise kann eine Bildaufnahmekamera über der Rennstrecke plaziert werden, die Bilder der Rennstrecke und der darauf befindlichen Rennwagen eigens zum Zwecke der Positionsermittlung liefert. Die Positionsdaten werden wiederum über das Internet den Nutzern übermittelt.

Das Verfahren ist nicht nur für Autorennen, sondern beispielsweise auch für Motorradrennen, Motorbootrennen etc. geeignet.

## Patentansprüche

1. Verfahren zur computergestützten simulierten Teilnahme an einem realen Rennen mit mehreren Rennteilnehmern, wobei die räumlichen Bedingungen einer realen Rennstrecke für den Rennverlauf zugrundegelegt werden und die simulierte Rennteilnahme eines Nutzers aus der Sicht des Nutzers dargestellt wird, **gekennzeichnet durch**:
- Laden von erfassten Renndaten eines realen Rennverlaufs mit mindestens den erfassten geographischen Positionen von realen Rennteilnehmern auf einen dezentralen Simulationsrechner;
- Simulation der Rennteilnahme des Nutzers in dem realen Rennverlauf mit dem Simulationsrechner;
- Darstellen des simulierten und realen Rennverlaufs aus der Sicht des Nutzers.

2. Verfahren nach Anspruch 1, **gekennzeichnet durch** Laden der Daten zur Beschreibung der räumlichen Bedingungen der realen Rennstrecke für die Simulation der Rennstrecke auf einen dezentralen Simulationsrechner.

3. Verfahren nach Anspruch 1 oder 2, **dadurch gekennzeichnet, daß** die Renndaten von einem zentralen Rechner auf den Simulationsrechner geladen werden.

4. Verfahren nach einem der vorhergehenden Ansprüche, **dadurch gekennzeichnet, daß** eine geographische Position eines realen Rennteilnehmers durch Messung der Laufzeiten eines Funksignals von einem Funksender des Rennteilnehmers mittels mehrerer Funkempfänger bestimmt wird.

5. Verfahren nach einem der Ansprüche 1 bis 4, **dadurch gekennzeichnet, daß** die geographische Position eines realen Rennteilnehmers mit einem satellitengestützten Ortungssystem bestimmt werden.

6. Verfahren nach einem der Ansprüche 1 bis 4, **dadurch gekennzeichnet, daß** die geographische Position eines realen Rennteilnehrners mit Bildaufnahmekameras und einem an die Bildaufnahrnekameras angeschlossenen automatischen oder manuellen Bildauswertungssystem bestimmt werden.

7. Verfahren nach einem der vorhergehenden Ansprüche, **gekennzeichnet durch** zusätzliches Erfassen und Laden von Beschleunigungswerten von Rennteilnehmern als Renndaten.

8. Verfahren nach einem der vorhergehenden Ansprüche, **gekennzeichnet durch** Simulation von Kosten für die Rennteilnahme, wobei ein Kosten-Budget **durch** Internet-Verknüpfung zu Internet-Angeboten von Sponsoren aufgestellt werden kann.

9. Computerprogramm mit Programmcodemitteln zur Durchführung des Verfahrens nach einem der vorhergehenden Ansprüche, wenn das Computerprogramm auf einem Simulationsrechner ausgeführt wird.

10. Computerprogramm mit Programmcodemitteln zur Aufbereitung und Bereitstellung von Renndaten für die Durchführung des Verfahrens nach einem der Ansprüche 1 bis 8.
